# EUROPEAN PATENT APPLICATION

(11) **EP 2 144 457 A1**
(43) Date of publication of application: **13.01.2010**
(21) Application number: 08011847.4
(22) Date of filing: 01.07.2008
(51) Int. Cl.: H04W 4/12

(54) **Mobile communication device and adapter module**

(71) Applicant: Vodafone Holding GmbH, 40213 Düsseldorf (DE)
(72) Inventor: Koraichi, Najib, 6333 CT Schimmert (NL); Montaner, Javier, 50008 Zaragoza (ES)
(74) Representative: Jostarndt, Hans-Dieter

(57) **Abstract**

A mobile communication device, an adapter module for use in a mobile communication device and a method for transmitting a message from a mobile communication device to a receiving device are suggested. The adapter module (210) is connected to a first communication network (102). The mobile communication device comprises a mobile terminal (200) and a subscriber identification module (207) connected to the mobile terminal. In the subscriber identification module an address of a first gateway node is stored for integration into the message. The adapter module (210) is connected to the mobile terminal. The adapter module is configured to modify the message to be submitted to a terminating communication device (101) such that the message is submitted to a second gateway node (106). The second gateway node (106) is configured to transmit the message to the terminating communication device (101).

## Description

### Technical Field

The present invention relates to a mobile communication device, an adapter module for using a mobile communication device and a method for transmitting a message from a mobile communication device to a receiving device.

### Background of the invention

One of the most popular services offered by mobile communication systems, such as, for example, GSM (Global System for Mobile Communications) or UMTS (Universal Mobile Telecommunications System), is the short messaging-service (SMS). The SMS is particular popular among mobile telephone users. The SMS allows mobile communication devices such as mobile telephones to send and receive short text messages. Each short message or SMS message may contain up to 160 characters. SMS messages are popular on the side of the users because they are a cheap alternative to a telephone call. Sometimes SMS messages are even available free of costs.

On the side of the network operators SMS messages are interesting because they contain very little data compared to a telephone communication and therefore the bandwidth requirements are low. In view of the large number of SMS messages the revenues of the SMS service is high for the network operator in spite of the low cost of an individual SMS message. At the same time the bandwidth requirements for the SMS service is low and hence the associated network costs.

In general, SMS messages are sent from one mobile communication device to another communication device via an SMSCentre (SMSC). The outgoing SMS message includes the identification code of the terminating communication device as well as the address of the SMSCentre by which the message is to be routed. The address of the terminating communication device and/or the SMSC may be a mobile service integrated services number (MSISDN). The SMSC transfers the message to the recipient and extracts information for billing purposes.

In principle usually several network providers are available for the user of the mobile communication device. However, each user has some kind of contractual obligation with a specific network operator. A subscriber identification module identifies the user to the network operator and allows him to connect to the network. The subscriber identification module is integrated into a smart card connected to the mobile communication device. In GSM the subscriber identification module is referred to as SIM (Subscriber Identity Module); in UMTS the subscriber identification module is referred to as USIM (Universal Subscriber Identity Module). In general, the network operator requires that SMS messages are sent to a specific SMSC. Consequently, the user of a mobile communication device cannot select discretionally a SMSC providing free or cheaper SMS messages or a better service than the network operator he has signed up. In contrast to a user of a mobile communication device an internet user may select the SMSC according to his preferences from a plurality of choices. The subscriber identification module in his mobile communication device ties the mobile user to a specific SMSC in most cases. Thus, the user of a mobile communication device does not have the same freedom of choice with regard to the SMSC like an Internet user.

In WO 03/005738 a method for routing SMS messages is disclosed. According to this method mobile communication devices in a mobile telecommunication system are operated such that messages are routed to their destination address via a routing centre. The routing centre is selected from a plurality of available routing centres. When a message is submitted from a mobile device it is trapped inside the device before its transmission. The processor inside the mobile communication device compares the original routing centre address with a second routing centre address stored in the memory to which the user does not have a write access. The second routing centre address is determined by an administrator of a telecommunications system. If it is found that the addresses are different, the first routing centre address is replaced by the second routing centre address in the corresponding data field. Only then the outgoing message is released for being routed via the second routing centre identified by the second routing centre address. The second routing centre address is the preferred gateway address of the network operator. The preferred routing centre address is stored in a SIM card in the mobile communication device. The network operator may overwrite the stored address, if necessary. The known method allows for overriding the user preference and for controlling the addressing of SMS messages such that the operator preferred SMS Centre is utilized when sending SMS messages.

### Summary of the invention

There remains a desire to convey to the user of a mobile communication device more control about the selection of short message service centres (SMSC) through which his messages are routed to their destination.

For responding to this desire the present invention provides an adapter module for use in a mobile communication device. The mobile communication device comprises a mobile terminal and a subscriber identification module connected to the mobile terminal. In the subscriber identification module, an address of a first gateway node is stored for integration into the message. An adapter module is connected to the mobile terminal. The adapter module is configured to modify the message to be submitted to a terminating communication device such that the message is submitted to a second gateway node. The second gateway node is configured to transmit the message to the terminating communication device.

In an embodiment of the present invention the adapter module is configured to modify the message to be submitted to a terminating communication device such that the address of the first gateway node is replaced by the address of the second gateway node. In this case the second gateway node is connected to the first communication network.

In another embodiment of the present invention, the adapter module is configured to modify the message to be submitted to a terminating communication device such that the address of the terminating communication device is replaced by the address of the second gateway node. In this case the adapter module is configured to paste the address of the terminating communication device into another portion of the message and the second gateway node is configured to read the address of the terminating communication device from this portion of the message and to transmit the message to the terminating communication device.

In an embodiment of the invention the terminating mobile communication device is connected to a second communication network.

Advantageously, the adapter module is connected between the mobile terminal and the subscriber identification module.

In a useful embodiment of the present invention the adapter module is configured to enable a user to input the destination address of the second gateway node.

With regard to the present invention the first and/or second network can be mobile communication network.

It is another object of the present invention to provide a mobile communication device for transmitting a message to a terminating communication device selected by a user of the mobile communication device.

The present invention suggests a mobile communication device for transmitting a message to a terminating communication device selected by a user of the mobile communication device. The mobile communication device is connected to a first communication network and comprises a mobile terminal to which a subscriber identification module is connected. In the subscriber identification module, an address of a first gateway node is stored for integration into the message. An adapter module is connected to the mobile terminal. The adapter module is configured to modify the message to be submitted to the terminating communication device such that the message is submitted to a second gateway node. The second gateway node is configured to transmit the message to the terminating communication device.

Finally it is an object of the present invention to suggest a method for transmitting a message from a mobile communication device to a receiving device.

The invention suggests a method for transmitting a message from a mobile communication device to a receiving device. The method comprises the following steps:
- defining the content of the message to be transmitted;
- entering the identification code of the receiving device;
- replacing an original address by an address of a second gateway node.

In an embodiment of the invention, the original address is the address of a first gateway node while in another embodiment the original address is an identification code of the receiving device.

In an advantageous embodiment the inventive method comprises the step of pasting the original address of the receiving device into the body of the message.

In a further embodiment the inventive method comprises the steps of capturing an outgoing message and/or call and sending it back to the subscriber identification module from the mobile terminal.

### Brief description of the drawings

Reference will be made by way of example to the accompanying drawings in which
- Fig. 1: is a schematic depiction of a mobile communication device connected to a communication network linked with a gateway for submitting messages;
- Fig. 2: is a schematic block diagram of one embodiment of the mobile communication device according to the present invention; and
- Fig. 3: is a flow diagram describing a method according to the invention.
- Fig. 4: is a schematic depiction of a mobile communication device connected to a communication network linked with a free gateway for submitting messages;

### Detailed description of embodiments of the invention

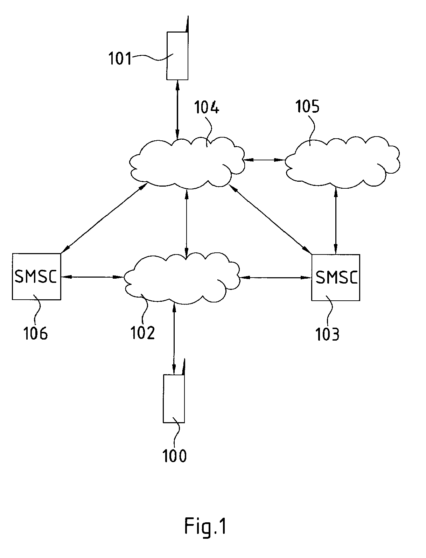

Figure 1 schematically depicts a telecommunication system for establishing a communication link between a mobile communication device 100 and a terminating communication device 101. The mobile communication device 100 may be cellular phone, a personal digital assistant (PDA) or the like and is registered in a mobile communication network 102. The mobile communication network 102 is a public land mobile network (PLMN), for example. The mobile communication network 102 e.g. configured according to the GSM standard or the UMTS standard and comprises a circuit switched domain and a packet switched domain. The mobile communication device 100 accesses the PLMN 102 network wirelessly via a radio access network, which may be configured according to a radio access technology known to a person skilled in the art. In an exemplary embodiment of the present invention the radio access network is configured as GERAN (GSM EDGE Radio Access Network) or UTRAN (UMTS Terrestrial Radio Access Network).

A first gateway node 103 is connected with the network 102. In the embodiment shown in Figure 1 the gateway node 103 is a first short message service centre (SMSC). The destination address of the SMSC may have the same structure as a normal mobile subscriber integrated services digital network number (MSISDN) and is stored in the setup of the mobile communication device. The destination address of the first SMSC 103 is referenced as ADR1.

The terminating communication device 101 is connected to a terminating communication network 104, which is another mobile communication network, a public switched telephone network (PSTN) or a network based on the Internet Protocol (IP). The terminating communication device 101 may be a cellular phone, a PDA, a personal computer, a notebook or a telephone device, for example. The communication devices 100, 101 are connected with the network's 102 and 104, respectively, over the corresponding radio access networks of the networks.

From mobile communication device 100 an SMS message cannot be sent directly to the terminating communication device 101. The SMS message is routed via the first SMSC 103 which is the prescribed SMSC of the network operator of network 102. The network 102 is supposed to be the home network of the mobile communication device 100. The SMSC 103 routes the SMS message to network 104 where the terminating mobile communication device 101 is registered. But it is also possible that the SMS message is routed through another intermediate network 105 before it reaches the network 104.

Figure 1 also shows a second SMSC 106. The SMSC 106 is also connected to the network 102 but is not the preferred SMSC of the operator of network 102. The specific destination address of SMSC 106 is referenced as ADR2. In general, all SMS messages of mobile users registered in the network 102 are submitted to the preferred SMSC 103 of the operator of network 102 because the address ADR1 of the SMSC 103 is stored in the subscriber identification modules of the mobile communication devices registered in network 102.

The SMS utilizes signalling channels such as the SDCCH (Stand Alone Dedicated Control Channel) or FACCH (Fast Associated Control Channel). These channels are also used to set up telephone calls and to hold them. In general an SMS message is submitted to the SMSC of the mobile network operator and not directly to the communication device of the recipient. The SMSC reads from the header of the SMS message the destination address and transmits the SMS message within its own network to the terminating communication device or hands it over to another network. The different network operators are interconnected between each other. If the recipient is not a mobile communication device but an application run in a computer, for example, then the contents of the message will be transmitted to the server of the service provider.

An SMS message is partitioned into 2 parts: a header and a body. The header contains essential information about the message such as the number of the sender, the type of coding, the type of font and the address of the recipient. The body contains the contents of the message which is to be displayed on the display of the receiver. For conventional text SMS messages the body is limited to the size of 160 characters. Longer messages can be transmitted by concatenated SMS messages.

On the market, there are many types of contracts available including subsidised mobile phones if a customer signed up with a certain network operator under certain conditions. In such a case the user of a mobile phone cannot send SMS messages to another SMSC then the one which is prescribed by the network operator with whom he has signed a contract.

In the following an adapter module is described which overcomes the limitations for the user of such mobile communication devices.

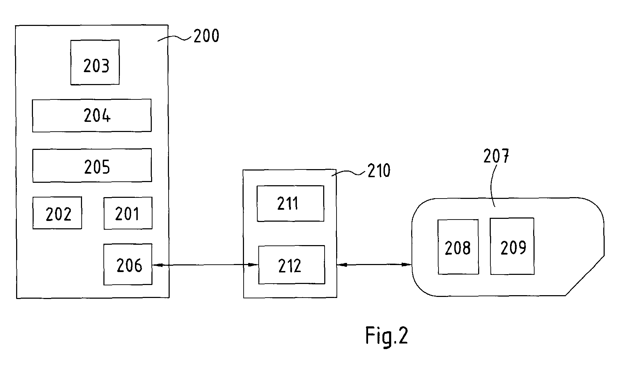

Figure 2 shows a schematic block diagram of the mobile communication device 100 in one embodiment of the present invention. The mobile communication device 100 comprises a mobile terminal 200 including a main processor 201 for controlling the operation of the mobile terminal 200. A memory unit 202 is coupled to the main processor 201 for storing data and applications that can be run on the main processor 201.

Furthermore, the mobile terminal 200 comprises one or more communication interfaces. Particularly, the mobile terminal 200 provides a radio interface 203 for connecting the mobile terminal 200 wirelessly to the PLMN 103. A further wireless interface, such as for example, a WLAN interface may be provided for connecting the mobile terminal 200 to an IP network.

Moreover, the mobile terminal 200 comprises a display unit 204 and an input unit 205, which can be operated by the user of the mobile communication device 100. The input unit 205 may be configured as a keypad.

By means of a card reader unit 206, the mobile terminal 200 can be connected to a subscriber identification module 207 to form the mobile communication device 100. The subscriber identification module 207 is integrated into a so-called smart card, which can be inserted into a card receptacle of the mobile terminal 200 that holds the card in a position, in which its contact elements are connected to corresponding contact elements of the card reader unit 206 of the mobile terminal 200. The card receptacle and the card reader unit 206 are usually arranged within a battery compartment of the mobile terminal 200, which is accessible by the mobile user.

The subscriber identification module 207 may be configured as a subscriber identity module (SIM) according to the GSM standard or as a universal subscriber identity module (USIM) according to the UMTS standard. It comprises a microprocessor 208 and a non-volatile memory 209 and stores pre-configured user-related and network-related data, particularly data identifying the mobile user and data for authenticating the user or his mobile communication device 100 to the cellular mobile network 102. Moreover, it may store personal data of the mobile user, such as for example, identification codes of communication partners of the mobile user, which are managed by an address book application.

Within the scope of the invention, the subscriber identification module 207 is not connected directly to the mobile terminal 200 or its card reader unit 206, but via an adapter module 210. The adapter module 210 comprises a microprocessor 211 and a memory unit 212 for storing data and applications that can be run on the microprocessor 211. The adapter module 210 is connected between the mobile terminal 200 and the subscriber identification module 207 and acts as a so-called man in the middle between the mobile terminal 200 and the subscriber identification module 207. Hence, communication signals between the mobile terminal 200 and the subscriber identification module 207 are exchanged via the adapter module 210 that forwards data messages from the mobile terminal 200 to the subscriber identification module 207 and vice versa.

The adapter module 210 is capable of manipulating or modifying the data exchange between the mobile terminal 200 and the subscriber identification module 207. Moreover, the adapter module 210 is capable of initiating a communication with the mobile terminal 200 and/or the subscriber identification module 207 to interact proactively with the mobile terminal 200 and with the subscriber identification module 207. For this purpose, the adapter module 210 may implement the SIM application toolkit (SAT) specified in the specification GSM 11.14 of the 3^{rd} generation project partnership (3GPP) if the subscriber identify cation module 207 is a SIM according the GSM standard or the adapter module 210 may implement the USIM application toolkit (USAT) specified in the specification TS 31.111 of the 3GPP if the subscriber identification module 207 is a USIM. Hereinafter, the SAT and the USAT are commonly referred to as (U)SAT.

The (U)SAT allows the subscriber identification module 207 to access functions of the mobile terminal 200 and particularly comprises so-called proactive commands by means of which the subscriber identification module 207 is able to access the functions of the mobile terminal 200 on its own initiative. By implementing the (U)SAT in the adapter module 210, the adapter module 210 is able to access the functions of the mobile terminal 200 in the same way as the subscriber identification module 207.

For connecting the adapter module 210 between the mobile terminal 200 and the subscriber identification module 207, the adapter module 210 comprises a contacting element, which can be inserted into the card receptacle of the mobile terminal 200 and which includes electric contacts for contacting the contact elements of the card reader unit 206. Further electrical contacts are provided for contacting the electric contacts of the subscriber identification module 207. The electric contacts for connecting the adapter module 210 to the mobile terminal 200 and the electric contacts for connecting the adapter module 210 are connected to the microprocessor 211 of the adapter module 210.

As one of the electric contacts of the card reader unit 206 of the mobile terminal 200 acts as a power supply for the subscriber identification module 207, the adapter module 210 can also be supplied with power via this electric contact. Moreover the adapter module 210 is able to forward data received via an electric contact of the card reader to the corresponding electric contact of the subscriber identification module 207 and vice versa. The forwarded data may be modified by the microprocessor 211 of the adapter module 210 or the adapter module 210 may leave the data unmodified, thereby allowing a normal communication between the mobile terminal 200 and the subscriber identification module 207. Moreover, the proactive commands are sent from adapter module 210 to the mobile terminal 100 via the electric contact, which are provided for sending commands from the subscriber module 207 to the mobile terminal 210.

In one exemplary embodiment, the adapter module 210 comprises a thin contacting element, which has essentially the same shape as the subscriber identification module 207 and which can be inserted into the card receptacle of the mobile terminal 200 between the electric contacts of the card reader unit 206 and the subscriber identification module 207. On one surface, the contacting element comprises contact elements for contacting the contact elements of the subscriber identification module 207 and on the opposite surface, contact elements are arranged for contacting the contact elements of the card reader unit 206. The contact elements are connected to the microprocessor 211 of the adapter module 210. The microprocessor 211 and the memory unit 212 of the adapter module 210 may be mounted on a circuit board, which is connected to the contacting element by means of a flexible wire, thereby allowing placing the circuit board into the battery compartment of the mobile terminal 200 together with the battery. As an alternative, the microprocessor 211 and the memory unit 212 may be included in a chip that is mounted on the contacting element. In this embodiment, the subscriber identification module 207 is being provided with a cutting for accepting the chip.

In another embodiment, the adapter module 210 comprises a contacting element that has essentially the same shape and thickness as the subscriber identification module 207 and that can be inserted into the card receptacle of the mobile terminal 200 to contact the contact elements of the card reader unit 206. The contacting element is connected to a circuit board via one ore more flexible wires. The microprocessor 211 and the memory unit 212 are mounted on the circuit board and in addition, the circuit board comprises a card reader unit connected to the microprocessor 211 for receiving the adapter module 210 to the subscriber identification module 207. The circuit board may be thin enough to place it into the battery compartment of the mobile terminal 200.

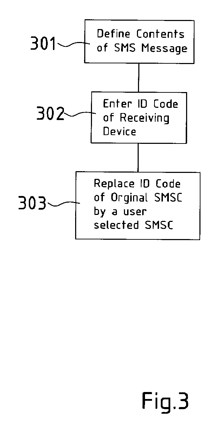

The invention is further illustrated by a flow diagram shown in Figure 3. In a first step 301 a user defines the contents of a SMS message. The contents forms the body of the SMS message. Then the user enters in step 302 an identification code of a receiving device. This is the MSISDN of a mobile telephone, for example. The adapter module 210 recognizes the generation of the SMS message and requests the control of an SMS message, which is a standard (U)SAT feature. Then, the module 207 changes the SMSC address to the destination address of a special SMSC. With reference to Figure 1 the adapter module 210 replaces the destination address ADR1 of SMSC 103 with ADR2 of SMSC 106 (step 303). Once these steps are performed the adapter module 210 transfers the amended SMS message to a radio interface of the mobile communication device 100. The radio interface sends the amended message to network 102.

In an alternative embodiment of the present invention, the adapter module 210 intercepts a message sent by the SIM card. The adapter module 210 replaces the original MSISDN which is stored in the SIM card by another MSISDN of a gateway which provides free SMS before the message is transferred to radio interface of the mobile communication device. Again with reference to Figure 1 the adapter module 210 replaces the destination address ADR1 of SMSC 103 with ADR2 of SMSC 106 (step 303).

Call control and SMS message control is a standard functionality in the (U)SAT. The subscriber identification module 207 is informed every time that a call for SMS message is sent from the mobile terminal 200. This functionality allows a user to check lists of outgoing calls or SMS messages. However, this functionality does not work for calls for SMS messages originating from the subscriber identification module 207 that may be generated using (U)SAT functionalities. By using the adapter module, the subscriber identification module 207 originated calls or SMS messages can be captured by the adapter module 210 and sent back to the subscriber identification module 207. The subscriber identification module 207 processes the SMS message as it would process a SMS messages originating from the mobile terminal 200. In this way it is again possible to generate complete lists of outgoing calls or SMS messages.

In yet another alternative embodiment of the present invention the adapter module 210 is preconfigured with an address of a free gateway for SMS messages. The SMS messages received by a free gateway are special free SMS messages. The receiver, i.e., the owner of the free SMS gateway, pays for the messages but not the sender.

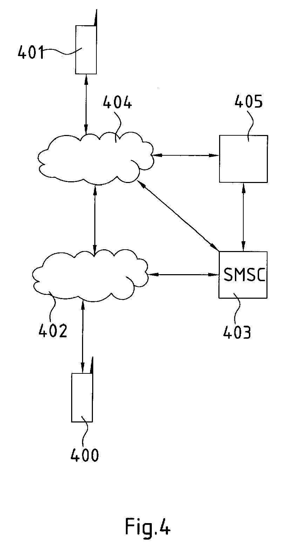

Figure 4 shows a telecommunication network comprising a free gateway for messages. A mobile communication device 400 is linked with a terminating communication device 401. The mobile communication device 400 is registered in a mobile communication network 402. Similar to Figure 1 the mobile communication device 400 may be cellular phone, a personal digital assistant (PDA) or the like. The mobile communication network 402 corresponds to the mobile communication network 102 of Figure 1. The mobile communication device 400 accesses the PLMN 402 wirelessly via a radio access network, which may be configured according to a radio access technology known to a person skilled in the art. In an exemplary embodiment of the present invention the radio access network is configured as GERAN or UTRAN.

A first gateway node 403 is connected with the network 402. In the embodiment shown in Figure 4, the gateway node 103 is a first short message service centre (SMSC). The address of the first SMSC 103 is referenced as ADR1.

The terminating communication device 401 is connected to a terminating communication network 104, which may be another mobile communication network, a public switched telephone network (PSTN) or an IP network based on the internet protocol (IP), for example. The terminating communication device 401 is a cellular phone, a PDA, a personal computer, a notebook or a telephone device. The communication devices 400, 401 are connected with the networks 402 and 404, respectively, over the corresponding radio access networks of the networks.

The adapter module 210 captures the SMS message to be sent to the terminating communication device 401 before it is passed to the radio interface of the mobile communication device 400. The adapter module 210 replaces the address of the terminating communication device 401 by the address ADR3 of a free gateway node 405. At the same time the address of the terminating communication device 401 is pasted into the body of the message. Consequently, the SMSC 403 sends the message to the gateway 405.

When the gateway 405 receives a message, it extracts the destination address of the final receiver and generates a new standard SMS with the text of the original message and maybe additional information such as advertising. It is within the scope of the present invention that the gateway generates more than one SMS messages depending on how much text the gateway includes into the original SMS message text. The new SMS message is sent by the free SMS gateway is a standard text SMS message using already defined protocols. The originating address of these messages may be the address original sender of the message. In this way, the recipient of the SMS message can identify the sender of the message.

As an additional functionality the operator can provide the SMS gateway with more information such as the current location of the sender and/or receiver, the relation between the sender/receiver (e.g. they call or send SMS messages each other frequently).

The service is transparent from an end user perspective who keeps on sending SMS messages using the mobile terminal 200 user interface. Consequently, the features of the user knows from his mobile communication device like T9, dictionary, insert phone numbers etc remain available.

## Claims

1. An adapter module (210) for use in a mobile communication device connected to a first communication network (102, 402), the mobile communication device comprising a mobile terminal (200) and a subscriber identification module (207) connected to the mobile terminal, wherein in the SIM subscriber identification module (207) an address of a first gateway node (ADR1) is stored for integration into the message, wherein an adapter module (207) is connected to the mobile terminal, the adapter module being configured to modify the message to be submitted to a terminating communication device (101, 401) such that the message is submitted to a second gateway node (106, 405), wherein the second gateway node (106, 405) is configured to transmit the message to the terminating communication device (101, 401).

2. The adapter module according to claim 1, wherein the adapter module is configured to modify the message to be submitted to a terminating communication device (101) such that the address of the first gateway node (ADR1) is replaced by the address of a second gateway node (ADR2).

3. The adapter module according to claim 2, wherein the second gateway node (106) is connected to the first communication network(102).

4. The adapter module according to claim 1, wherein the adapter module is configured to modify the message to be submitted to a terminating communication device (101) such that the address (MSISDN) of the terminating communication device (401) is replaced by the address of the second gateway node (ADR3).

5. The adapter module according to claim 4, wherein the adapter module (210) is configured to paste the address (MSISDN) into another portion of the message and the second gateway node (405) is configured to read the address of the terminating communication device from this portion of the message and to submit the message to the terminating mobile communication device (405).

6. The adapter module according to one of the preceding claims, wherein the terminating mobile communication device (101) is connected to a second communication network (104).

7. The adapter module according to one of the preceding claims, wherein the adapter module is connected between the mobile terminal (200) and the subscriber identification module (207).

8. The adapter module according to one of the preceding claims, wherein the adapter module is configured to enable a user to input the destination address (ADR2) of the second gateway node (106).

9. The adapter module according to one of the preceding claims, wherein the first and/or the second communication network (102, 104) is a mobile communication network.

10. A mobile communication device for transmitting a message (SMS) to a terminating communication device selected by a user of the mobile communication device, the mobile communication device (100) being connected to a first communication network (102) and comprising a mobile terminal (200) to which a subscriber identification module (207) is connected, wherein in the subscriber identification module (207) an address of a first gateway node (ADR1) is stored for integration into the message, wherein an adapter module (210) is connected to the mobile terminal (200), the adapter module (210) being configured to modify the message to be submitted to the terminating communication device (101, 401) such that the message is submitted to a second gateway node (106, 405), wherein the second gateway node (106, 405) is configured to transmit the message to the terminating communication device (101, 401).

11. The mobile communication device according to claim 10, wherein the adapter module (210) is configured to modify the message to be submitted to the terminating communication device (101, 401) such that address of the first gateway node (ADR1) is replaced by the address of the second gateway node (ADR2)

12. The mobile communication device according to claim 10 or 11, wherein the second gateway node (106) is connected to the first communication network (102).

13. The mobile communication device according to one of the claims 10 to 12, wherein adapter module (210) is configured to modify the message to be submitted to the terminating communication device (101, 401) such that the address (MSISDN) of the terminating communication device (401) is replaced by the address of the second gateway node (ADR3).

14. A method for transmitting a message from a mobile communication device to a receiving device, wherein the method comprises the following steps:
- defining the content of the message to be transmitted;
- entering the identification code of the receiving device;
- replacing an original address by an address of a second gateway node (106,405).

15. The method according to claim 14, wherein the original address is the address (ADR1) of a first gateway node (103).

16. The method according to claim 14, wherein the original address is the identification code (MSISDN) of the receiving device (401).

17. The method according to claim 16, comprising the step of pasting the identification code (MSISDN) of the receiving device (401) into the body of the message.

18. The method according to one of the claims 14 to 17, comprising the steps of capturing an outgoing message and/or call and sending it back to the SIM card (207) from the mobile terminal (200).
